# EUROPEAN PATENT APPLICATION

(11) **EP 1 798 977 A2**
(43) Date of publication of application: **20.06.2007**
(21) Application number: 06025385.3
(22) Date of filing: 08.12.2006
(51) Int. Cl.: H04N 7/173, H04N 5/76

(54) **System and method for providing context-aware local advertising in IPTV systems**

(30) Priority: 19.12.2005 US 311838
(71) Applicant: Alcatel Lucent, 75008 Paris (FR)
(72) Inventor: Cakaya, Hakki Candan, Dallas TX 75206 (US)
(74) Representative: Dreiss, Fuhlendorf, Steimle & Becker

(57) **Abstract**

System and method for providing personalized advertising in an Internet protocol television ("IPTV") system are described. In one embodiment, the method comprises awaiting notification of an impending ad insert period for a plurality of active televisions in a household; and, for each of the active televisions, selecting an ad from a group of ads for display on the active television and pushing the selected ad to the active television for presentation on the active television during the ad insert period.

## Description

### BACKGROUND OF THE INVENTION

### Technical Field of the Invention

The present invention generally relates to Internet Protocol television ("IPTV") systems. More particularly, and not by way of any limitation, the present invention is directed to system and method for providing context-aware local advertising in such systems.

### Description of Related Art

In IPTV systems, digital television services are delivered to subscribers using Internet protocol over a broadband connection. The digital television services may be combined with IP telephony and data services to provide a "triple play" package of services via the same infrastructure.

IPTV is expected to continue to grow at a brisk pace, as broadband is now available to more than 100 million households worldwide. Many of the world's major telecommunications providers are exploring IPTV as an opportunity to generate revenue from their existing markets and as a defensive measure against encroachment from more conventional cable television ("CATV") services.

An IPTV system requires two-way communication and therefore typically uses broadband technology based on xDSL over the local loop. Advantages of IPTV include two-way communications capabilities, which are lacking in traditional TV distribution technologies, as well as point-to-point distribution, which allows each viewer to view individual broadcasts. This enables stream control (e.g., pause, fast forward, rewind, etc.) and a broad selection of programming much like its narrowband cousin, the worldwide web.

### SUMMARY OF THE INVENTION

One embodiment is a method of providing personalized advertising in an Internet protocol television ("IPTV") system. The method comprises awaiting notification of an impending ad insert period for a plurality of active televisions in a household; and, for each of the active televisions, selecting an ad from a group of ads for display on the active television and pushing the selected ad to the active television for presentation on the active television during the ad insert period.

Another embodiment is a system for providing personalized advertising in an Internet protocol television ("IPTV") system. The system comprises means for detecting an impending ad insert period for a plurality of active televisions in a household; means for selecting, for each of the active televisions, an ad from a group of ads for display on the active television; and means for pushing the selected ad to the active television for presentation on the active television during the ad insert period.

Another embodiment is a system for providing personalized advertising in an Internet protocol television ("IPTV") system. The system comprises a residential gateway disposed within a house for receiving an ad package from an IPTV service provider and for storing the ads comprising the ad package in a personal video recorder ("PVR"); and a plurality of televisions located throughout the house, wherein each of the televisions is connected to the residential gateway via a set top box. ("STB"), wherein responsive to occurrence of an ad insertion period, the residential gateway selects an ad from the group of ads stored in the PVR for each active one of the televisions and pushes the selected ad to the television for display thereon during the ad insertion period.

Another embodiment is a method for providing personalized advertising in an Internet protocol television ("IPTV") system. The method comprises evaluating demographic information for a plurality of distribution areas ("DAs"); for each of the DAs, selecting ads from a group of ads for presentation to households in the DA, wherein the selected ads comprise an ad package for the DA; and for each of the DAs, pushing the ad package to the DA.

Another embodiment is a system for providing personalized advertising in an Internet protocol television ("IPTV") system. The system comprises means for evaluating demographic information for a plurality of distribution areas ("DAs"); means for selecting ads from a group of ads for each of the DAs for presentation to households in the DA, wherein the selected ads comprise an ad package for the DA; and means for pushing to each of the DAs the ad package for the DA.

### BRIEF DESCRIPTION OF THE DRAWINGS

A more complete understanding of the present invention may be had by reference to the following Detailed Description when taken in conjunction with the accompanying drawings wherein:

FIG. 1 is a block diagram illustrating a macro-level context-awareness aspect of an embodiment;

FIG. 2 is a block diagram illustrating a micro-level context-awareness aspect of an embodiment; and

FIG. 3 is a flowchart of the operation of the micro-level context-awareness aspect of an embodiment as illustrated in FIG. 2.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

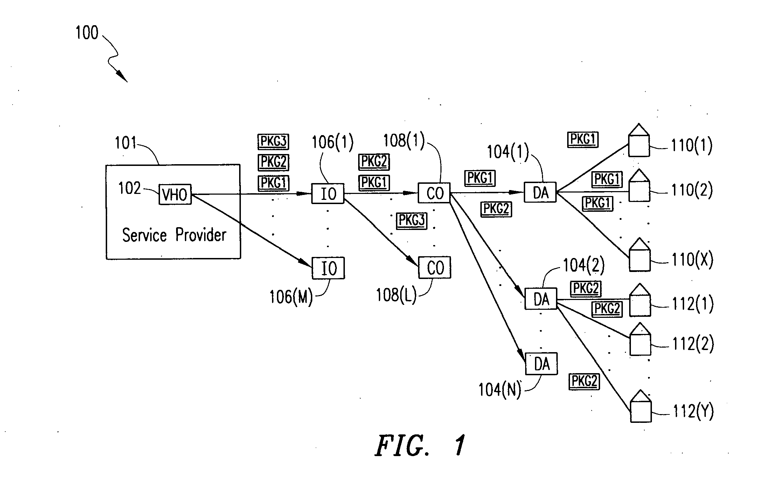

In one aspect, an embodiment uses components of an IPTV architecture to implement a macro-level context-awareness, as illustrated in FIG. 1. As shown in FIG. 1, IPTV services are provided to a metro area 100 by a service provider 101. As will be described in greater detail, a video home office ("VHO") 102 of the service provider 101 periodically pushes different bundles of ads, or ad packages, represented in FIG. 1 by ad packages PKG1, PKG2, and PKG3, to various distribution areas ("DAs") 104(1)-104(N) within the metro area 100 via one or more intermediate offices ("IOs") such as IOs 106(1)-106(M), and one or more central offices ("COs"), such as COs 108(1)-108(L). In one embodiment, the decision as to which ad packages PKG1-PKG3 are pushed to which DAs 104(1)-104(N) is made in accordance with to demographic information collected for households comprising each of the DAs 104(1)-104(N).

For example, an advertiser may use the available demographic information to select DAs to which its ads are to be directed. Alternatively, an advertiser may provide to the service provider a set of criteria that may be used by the service provider to select DAs to which the advertiser's ads are to be directed. In either case, the embodiment enables the advertiser to pay only for advertising that is directed to likely customers, based on the demographic information with respect to the DAs.

In particular, as shown in FIG. 1, the DA 104(1) comprises households 110(1)-110(X); the DA 104(2) comprises households 112(1)-112(Y). It will be recognized that DAs 104(1) and 104(2) may correspond to different geographic areas, and therefore different neighborhoods, and that the residents of those respective neighborhoods may have interests that differ from one another and may be close to different businesses. Accordingly, it would be beneficial for an advertiser to be able to "target" its ads to neighborhoods that are close to the advertiser's place of business or service area and to avoid paying for advertising that reaches subscribers that are located a great distance from the advertiser's place of business or service area. Similarly, it would be beneficial for an advertiser to target its ads to neighborhoods comprised of subscribers who tend to be more interested in the advertiser's products/services and to avoid paying for advertising that reaches neighborhoods comprised of subscribers that tend to be less interested in those products/services. In other words, ideally, an advertiser wants to advertise to and only pay for advertising that reaches subscribers who are likely potential customers.

Referring again to FIG. 1, it will be assumed for the sake of example that a determination has previously been made, based on demographic factors, geographic factors, other factors, or some combination of those factors, that the ads comprising the ad package PKG1 are to be targeted to households comprising the DA 104(1) (i.e., households 110(1)-110(X)). Accordingly, the VHO 102 periodically (e.g., hourly, daily, weekly, monthly) pushes the ad package PKG1 to the DA 104(1) via the IO 106(1) and the CO 108(1). It will be similarly assumed for the sake of example that a determination has previously been made, based on those factors described above, that the ads comprising the ad package PKG2 are to be targeted to the households comprising the DA 104(2) (i.e., households 112(1)-112(Y)). Accordingly, the VHO 102 periodically pushes the ad package PKG2 to the DA 104(2) via the IO 106(1) and the CO 108(1).

In the manner described above, different ads can be inserted in different distribution areas ("DAs") of a metro area such that advertisers comprising small, as well as large, enterprises can benefit from local and more affordable advertising. The ads can be targeted to reach only local neighborhood subscribers; therefore, the advertisers can be charged only for those neighborhoods their ads reach, thus providing finer granularity than conventional local ad inserts for the greater metro area. This is easy for the service provider to accomplish, since it has knowledge of the DAs in the metro area. Basically, the embodiment offers a transfer of this knowledge to an added value for the service providers where they may choose to create another revenue source.

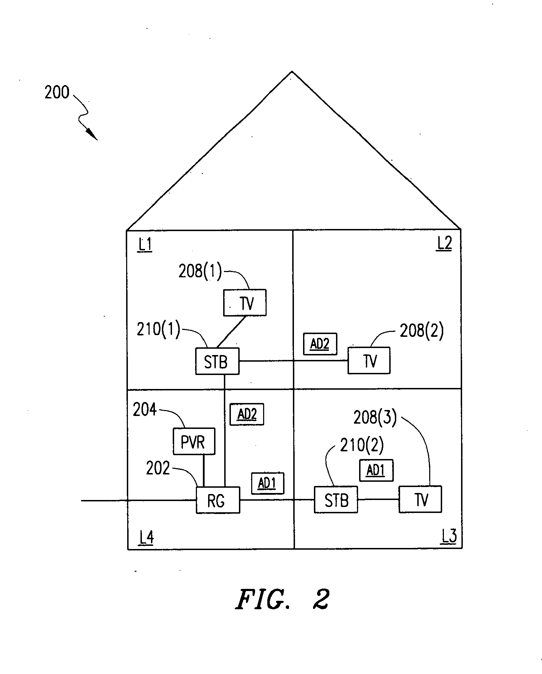

In another aspect, an embodiment implements a micro-level context awareness within a single household to make advertising more efficient and beneficial for all of the interested parties; that is, subscribers, service providers, and advertisers. The average American home has multiple television sets distributed among the various living areas of the home. It will be recognized that various factors affect how a subscriber will respond to an advertisement. Such factors may include, for example, where the subscriber is when the advertisement is presented to him or her, the time at which the advertisement is presented to him or her, and the context in which the advertisement is presented to him or her. For example, a subscriber is more likely to purchase and/or consume a product when reminded when he or she is at a closer proximity to it. Accordingly, an embodiment effectuates inserting ads into IPTV content depending on the context and location of the TV set in the home. For example, food-related ads may best be presented during programming on a TV located in the kitchen, whereas an ad for a new animated movie may best be directed to a TV in the children's room. This aspect will be referred to herein as "micro-level context-awareness" and is illustrated in FIG. 2.

As shown in FIG. 2, a house 200 equipped with IPTV comprises a plurality of living areas L1-L4. As previously noted with reference to FIG. 1, in accordance with an embodiment, ad packages are pushed periodically (e.g., hourly, daily, weekly, monthly) from the VHO of the service provider to designated DAs. Each DA forwards the ad packages to a residential gateway ("RG") within each of the homes comprising the DA. As illustrated in FIG. 2, an RG 202 located within the house 200 receives the ad package from the DA to which the house is connected and stores the ads in a personal video recorder ("PVR") 204. The RG 202 is aware of the content currently being presented on and the location of each of a plurality of TVs 208(1)-208(3) throughout the house 200, as well as to which of one or more set top boxes ("STBs"), such as STBs 210(1), 210 (2), the TV is connected. For example, as illustrated in FIG. 2, the TVs 208(1), 208(2), and 208(3), are respectively located in the living areas L1, L2, and L3. The TVs 208(1) and 208(2) are connected to the STB 210(1), while the TV 208(3) is connected to the STB 210(2). This "knowledge" of the locations of TVs throughout the house can be gained by the service provider's providing free wiring service, for example. During the wiring of the house, the service provider will be able to determine in which rooms TVs are located and to which STBs those TVs are connected. It will be recognized that this knowledge can be gained by other means as well.

During an ad insert period, which is determined from a stored Electronic Program Guide ("EPG"), the RG 202 routes a related ad insert from the PVR 204 to the TVs 208(1)-208(3) according to the location of and content being presented on the TV. As illustrated in FIG. 1, during a single same ad insertion period, the TV 208(3) in the living area L3 receives, via the STB 210(2), an ad insert for a first ad ("AD1"), while the TV 208(2) in the living area L2 receives, via the STB 210(1), an ad insert for a second ad ("AD2"). It will be recognized that the RG in another home in the same DA will receive the same package of ads; however, those ads will be presented differently throughout that other home in accordance with the micro-level context-awareness described herein. In contrast, the RG in a home in another DA of the same metro area may receive a different package of ads.

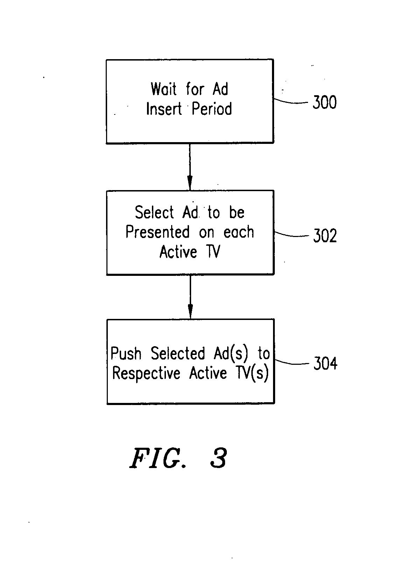

FIG. 3 is a flowchart illustrating operation of an embodiment for implementing the micro-level context-awareness illustrated in FIG. 2. In particular, immediately prior to each ad insert period (block 300), for each of the active TVs (i.e., the TVs that are powered on and on which IPTV programming is being presented) in the house, the RG selects one of the ads stored in the PVR to present on the TV (block 302). The selection can take into account a number of factors, including, for example, the time of day, the location of the TV, and the programming currently being viewed on the TV. Additionally, a user may indicate, via known programming techniques, a preference with regard to advertising to be presented on the TV. For example, the user have recently purchased a new car and therefore wants to filter advertisements related to car dealers. As another example, the user may be interested in trying new restaurants and may indicate a preference for restaurant-related advertisements.

As a practical matter, it may be necessary to place limits on a user's ability to filter ads, but this can easily be accomplished by the manner in which such filtering requests are implemented. For example, it may be useful to allow a user to have only a certain number of "filtering" requests active at a given time.

Once an ad has been selected for each active TV in the house, the ad(s) are pushed to the respective TV(s) (block 304), where they are presented to the user during the ad insert period.

The embodiments described herein enable ads to be personalized by the context and viewing location at a micro- (i.e., within the home) or macro- (i.e., distribution areas) level. In this manner, ads can address the needs of customers better so that customers are more interested in the ads that they are being provided. As a result, ads generate more revenue for the businesses purchasing them. IPTV providers can sell ads in addition to content providers. IPTV service providers can purchase ad insert rights wholesale from content providers and retail them to local businesses, since the IPTV providers have access to the knowledge of the DAs served by the providers.

Additionally, more localized advertising is possible. Local neighborhood businesses want to reach their potential local customers and do not care about the bigger metro area where the local linear TV programming feed is produced and inserted. Therefore, more affordable and profitable advertising is possible for small businesses; they just need to buy the number of DAs that they want to reach. For example, subscribers are more interested in sales at businesses near them and local businesses are more interested and generate more sales from subscribers in their neighborhoods.

IPTV service providers can sell this context-aware localized advertising to content providers. Businesses can purchase air time for their ads from content providers for the local areas that they want to cover. They can also choose their ads to be delivered only to specific living areas within a home, at a specific time of day, or a long with a specific content type. Small business owners are thereby provided more options for placing their ads, and therefore reaching their target audience. They can either buy ads from the IPTV service provider or from content providers. By the same token, IPTV service providers and content providers will have a wider customer base.

With ad air time lineup (overlap) among channels, the system assures the continuity of the aired ad. Ad air times synchronize for a set of channels, so zapping between those synchronized channels does not break the integrity of the ad. For customers, zapping between different ads is just a waste of time, as no message is received. For providers, the mission is accomplished for passing the ads message straight to the costumer and it is less likely for stolen bandwidth for overuse of the channel changer.

Local ad inserts will release some bandwidth for the duration of the ad to be used for housekeeping or for other further usage. This helps catch up the buffer at the STB in IPTV service. This duration could be used for other purposes, such as performing some maintenance activities, pushing other ad contents for later use, etc. Basically, this capacity is available for use.

The following features as well as the following system and method, separately or in any combination, may also constitute advantageous embodiments of the described or claimed invention:
- The claimed and/or described method wherein the selecting further comprises selecting an ad from the group of ads based on preferences of a subscriber.
- The claimed and/or described method further comprising an IPTV service provider pushing the group of ads to the household based on demographic information for a distribution area of the household.
- The claimed and/or described method further comprising the IPTV service provider pushing the group of ads to every household within the distribution area.
- The claimed and/or described method further comprising the IPTV service provider charging a fee to an advertiser based on a number of distribution areas to which an ad of the advertiser is pushed.
- The claimed and/or described method further comprising an IPTV service provider performing maintenance operations with respect to elements of the IPTV system during the ad insertion period.
- A system for providing personalized advertising in an Internet protocol television ("IPTV") system, the system comprising: means for detecting an impending ad insert period for a plurality of active televisions in a household; means for selecting, for each of the active televisions, an ad from a group of ads for display on the active television; and means for pushing the selected ad to the active television for presentation on the active television during the ad insert period.
- The claimed and/or described system wherein the group of ads comprise a package of ads, the system further comprising means for receiving the package of ads from an IPTV service provider via the IPTV system.
- The claimed and/or described system wherein the means for receiving comprises a residential gateway.
- The claimed and/or described system further comprising means for storing the received package of ads within the household.
- The claimed and/or described system wherein the means for storing comprises a personal video recorder ("PVR").
- The claimed and/or described system wherein the means for selecting and means for pushing comprise a residential gateway within the household.
- The claimed and/or described system wherein the means for selecting comprises means for selecting an ad from the group of ads based on a location of the active television within the household.
- The claimed and/or described system wherein the means for selecting further comprises means for selecting an ad from the group of ads based on current programming of the active television.
- The claimed and/or described system wherein the means for selecting further comprises means for selecting an ad from the group of ads based on preferences of a subscriber.
- The claimed and/or described system wherein an IPTV service provider pushes the group of ads to the household based on demographic information for a distribution area of the household.
- The claimed and/or described system wherein the IPTV service provider pushes the group of ads to every household within the distribution area.
- A method for providing personalized advertising in an Internet protocol television ("IPTV") system, the method comprising: evaluating demographic information for a plurality of distribution areas ("DAs"); for each of the DAs, selecting ads from a group of ads for presentation to households in the DA, wherein the selected ads comprise an ad package for the DA; and for each of the DAs, pushing the ad package to the DA.
- The claimed and/or described method further comprising collecting demographic information for the plurality of DAs.
- The claimed and/or described method wherein the selecting comprises selecting ads from a group of ads based on the demographic information for the DA.
- The claimed and/or described method wherein the selecting comprises selecting ads from a group of ads based on specific instructions from an advertiser.
- The claimed and/or described method wherein the selecting comprises selecting ads from a group of ads based on a geographic location of the DA.
- A system for providing personalized advertising in an Internet protocol television ("IPTV") system, the system comprising: means for evaluating demographic information for a plurality of distribution areas ("DAs"); means for selecting ads from a group of ads for each of the DAs for presentation to households in the DA, wherein the selected ads comprise an ad package for the DA; and means for pushing to each of the DAs the ad package for the DA.
- The claimed and/or described system further comprising means for collecting demographic information for the plurality of DAs.
- The claimed and/or described system wherein the means for selecting comprises means for selecting ads from a group of ads based on the demographic information for the DA.
- The claimed and/or described system wherein the means for selecting comprises selecting ads from a group of ads based on specific instructions from an advertiser.
- The claimed and/or described system wherein the means for selecting comprises means for selecting ads from a group of ads based on a geographic location of the DA.
   It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of providing personalized advertising in an Internet protocol television ("IPTV") system, the method comprising:
awaiting notification of an impending ad insert period for a plurality of active televisions in a household; and
for each of the active televisions, selecting an ad from a group of ads for display on the active television and pushing the selected ad to the active television for presentation on the active television during the ad insert period.

2. The method of claim 1 wherein the selected ad is presented on the active television regardless of a channel to which the active television is tuned.

3. The method of-claim 1 wherein the group of ads comprise a package of ads, the method further comprising receiving the package of ads from an IPTV service provider via the IPTV system.

4. The method of claim 3 further comprising storing the received package of ads in a personal video recorder ("PVR") of the household.

5. The method of claim 1 wherein the selecting comprises selecting an ad from the group of ads based on a location of the active television within the household.

6. The method of claim 1 wherein the selecting further comprises selecting an ad from the group of ads based on current programming of the active television.

7. A system for providing personalized advertising in an Internet protocol television ("IPTV") system, the system comprising:
a residential gateway disposed within a house for receiving an ad package from an IPTV service provider and for storing the ads comprising the ad package in a personal video recorder ("PVR"); and
a plurality of televisions located throughout the house, wherein each of the televisions is connected to the residential gateway via a set top box ("STB");
wherein responsive to occurrence of an ad insertion period, the residential gateway selects an ad from the group of ads stored in the PVR for each active one of the televisions and pushes the selected ad to the television for display thereon during the ad insertion period.

8. The system of claim 7 wherein the ad selection is based on current programming of the active television.

9. The system of claim 7 wherein the ad selection is based on preferences of a subscriber.

10. The system of claim 7 wherein the ad selection is based on a location of the active television.
